# EUROPEAN PATENT APPLICATION

(11) **EP 2 413 071 A2**
(43) Date of publication of application: **01.02.2012**
(21) Application number: 11006288.2
(22) Date of filing: 29.07.2011
(51) Int. Cl.: F25C 5/00

(54) **Refrigerator having multiple ice banks**

(30) Priority: 30.07.2010 KR 20100074261
(71) Applicant: LG ELECTRONICS INC., Yeongdeungpo-gu Seoul 150-721 (KR)
(72) Inventor: Oh, Seunghwan, Geumcheon-Gu Seoul (KR); Kim, Seongjae, Geumcheon-Gu Seoul (KR)
(74) Representative: Urner, Peter

(57) **Abstract**

A refrigerator includes: a refrigerator main body (1) including a freezing chamber (2) positioned at a lower portion thereof and a refrigerating chamber (3) positioned at an upper side of the freezing chamber (2); an ice maker (160) positioned at a portion in any of the freezing chamber (2) and the refrigerating chamber (3); first and second ice banks (170, 180) storing ice made by the ice maker (160); an ice dispenser (150) supplying ice stored in the first ice bank (170) and positioned in the refrigerating chamber (3); and an ice transfer unit transferring ice between the first and second ice banks (170, 180), wherein the first and second ice banks are installed in separate spaces which are thermally insulated and maintained at a different temperature, respectively.

## Description

### 1. Field of the Invention

The present invention relates to a refrigerator having a plurality of ice banks and, more particularly, to a refrigerator having a plurality of ice banks for keeping ice in storage.

### 2. Description of the Related Art

In general, a refrigerator includes a freezing chamber and a refrigerating chamber which are maintained at different temperatures. Meanwhile, various types of refrigerators each including a different number of freezing chambers and refrigerating chambers and a different disposition form are in the market, and so-called bottom freezer type refrigerators in which the mainly used refrigerating chamber is disposed at an upper portion and the freezing chamber is disposed at a lower portion are commonly used. Some of the bottom freezer type refrigerators include an ice maker for making ice and a dispenser for dispensing ice to the outside of a door, and in this case, for the sake of convenience, the ice maker and the dispenser are installed at an upper portion of the refrigerator, namely, at the refrigerating chamber door.

However, when the ice maker is disposed at the refrigerating chamber side maintained at an above zero temperature, the ice kept in storage is melt and clustered together or cling to each other after ice making is performed. Thus, in order to solve this problem, an insulation space maintained at a below zero temperature is provided within the refrigerating chamber, and the ice maker and an ice bank for keeping ice in storage are positioned within the insulation space, thus preventing ice from being melt.

However, such an insulation space occupies a large space in the refrigerating chamber, and restrains the internal space of the refrigerating chamber from being effectively used. Also, since the ice maker and the ice bank are installed in the limited space of the refrigerating chamber, the capacity of the ice bank cannot be sufficiently increased. In particular, in most cases, both ice and water are supplied through the dispenser, a device for supplying water is required to be additionally mounted in the interior of the refrigerating chamber, and to this end, the capacity of the ice bank is inevitably reduced.

### SUMMARY OF THE INVENTION

Therefore, in order to address the above matters, the various features described herein have been conceived.

An aspect of the present invention provides a refrigerator capable of minimizing the phenomenon in which ice stored in an ice bank is melt, while effectively using an internal space of the refrigerating chamber.

According to an aspect of the present invention, there is provided a refrigerator including: a refrigerator main body including a freezing chamber positioned at a lower portion thereof and a refrigerating chamber positioned at an upper side of the freezing chamber; an ice maker positioned at a portion in any of the freezing chamber and the refrigerating chamber; first and second ice banks storing ice made by the ice maker; an ice dispenser supplying ice stored in the first ice bank and positioned in the refrigerating chamber; and an ice transfer unit transferring ice between the first and second ice banks, wherein the first and second ice banks are installed in separate spaces which are thermally insulated and maintained at a different temperature, respectively.

Since a plurality of ice banks are provided and positioned in separate spaces which are thermally insulated, a storage capacity of the ice banks can be increased, and at least one of the plurality of ice banks may be disposed in a space maintained at a low temperature, thus minimizing ice from melting.

Here, the thermally insulated space may refer to a refrigerating chamber or a freezing chamber generally provided in the refrigerator, or may refer to a space partitioned by an insulating material in the refrigerating chamber or the freezing chamber. Thus, in an embodiment of the present invention, the first ice bank may be positioned in the refrigerating chamber and the second ice bank may be positioned in the freezing chamber, or both first and second ice banks may be positioned in the refrigerating chamber such that the second ice bank is provided at an inner side of the refrigerating chamber and positioned in an insulating space maintained at a temperature lower than that of the refrigerating chamber. Here, the second ice bank may have a storage capacity larger than that of the first ice bank.

Meanwhile, the ice transfer unit refers to a certain unit for transferring ice in both directions between the first and second ice banks, and ice may be appropriately distributed to be stored in the first or second ice bank by the ice transfer unit. For example, the ice transfer unit may include: first and second transfer ducts extending between the first and second ice banks, respectively; a first ice input unit inputting ice stored in the first ice bank to the first transfer duct; a second ice input unit inputting ice stored in the second ice bank to the interior of the second transfer duct; and a blower blowing air to the interior of the second transfer duct to pressure-transfer the ice to the first ice bank.

Namely, the ice is transferred upward by high pressure air, and when ice is transferred from the first ice bank to the second ice bank, ice is freely dropped by gravity, thus distributing ice to be stored in the first and second ice banks.

Besides, the ice transfer unit may include: first and second transfer ducts extending between the first and second ice banks, respectively; a first ice input unit inputting ice stored in the first ice bank to the first transfer duct; a second ice input unit inputting ice stored in the second ice bank to the interior of the second transfer duct; and a conveyer belt installed in the second transfer duct and transferring ice stored in the second ice bank to the first ice bank. Here, the transfer of ice from the second ice bank to the first ice bank is made by the conveyer belt, and transfer of ice in a reverse direction is made by gravity. According to circumstances, the transfer of ice in a reverse direction may be made by the conveyer belt.

Meanwhile, the refrigerator may further include: a cooling air supply duct supplying cooling air toward the ice maker, wherein the cooling air supplied through the cooling air supply duct may be returned to the freezing chamber through the first transfer duct. Namely, the ice maker makes ice upon receiving cooling air in the interior of the freezing chamber, and here, in order to supply such cooling air, a cooling air supply duct for discharging cooling air and a cooling air return duct for sucking cooling air and returning the cooling air to the freezing chamber are basically required, but here, the first transfer duct may be utilized as the cooling air return duct. Of course, the second transfer duct may be utilized as a cooling air return duct.

Meanwhile, at least one of the first and second transfer ducts may be buried in the inner wall of the refrigerator main body to maximize a valid capacity within the refrigerator.

Meanwhile, the first and second transfer ducts communicate with the space maintained at a relatively low temperature, having a possibility of a leakage of cooling air. In order to prevent a leakage of cooling air, a damper for opening and closing a first ice bank side opening of each of the first and second transfer ducts may be additionally provided, and the damper may be controlled to open the opening only when ice is transferred, thus minimizing a leakage of cooling air.

Meanwhile, the first ice input unit may include a first auger for pushing ice stored in the first ice bank to the opening of the first transfer duct, and ice stored in the first ice bank may be transferred to a dispenser or the first transfer duct according to the operation of the first auger. When ice, transferred by the auger, is transferred to the opening of the first transfer duct, ice is transferred by self-load to the second ice bank.

Meanwhile, the second ice input unit may include: an ice input path connected with the second ice bank; and a second auger pushing ice input from the ice input path to an inner side of an input hole formed on the second transfer duct.

Here, the refrigerator may further include: a damper for opening and closing the input hole formed on the second transfer duct. Accordingly, ice can be prevented from moving backward through the input hole in the transfer process.

Also, an ice support portion for supporting ice input to the interior of the second transfer duct may be provided, and the ice support portion may be formed such that it allows air to pass therethrough.

Meanwhile, in another example, the ice transfer unit may include: a first transfer duct extending between the first and second ice banks; and a spiral transfer screw installed at the inner side of the first transfer duct and forwardly and reversely moving to transfer ice in both directions between the first and second ice banks. An impeller may be fixed around a rotational shaft and rotated together with the rotational shaft to transfer ice.

Meanwhile, the ice maker may be provided on the refrigerating chamber side door or within the refrigerating chamber.

According to embodiments of the present invention, since a plurality of ice banks are distributedly disposed, ice storage capacity can be increased, and since the plurality of ice banks are disposed in spaces maintained at different temperatures, melting of ice while being kept in storage can be minimized.

The foregoing and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a perspective view of a refrigerator according to an embodiment of the present invention;
FIG. 2 is a vertical sectional view showing an internal structure of the refrigerator of FIG. 1;
FIG. 3 is an enlarged sectional view showing a portion of FIG. 2; and
FIG. 4 is an enlarged sectional view showing the interior of a first ice bank in FIG. 2;
FIG 5 is a vertical sectional view of a refrigerator according to another embodiment of the present invention;
FIG. 6 is a perspective view showing a portion of a conveyer belt in FIG. 5;
FIG. 7 is a vertical sectional view of a refrigerator according to another embodiment of the present invention.

### DETAILED DESCRIPTION OF THE INVENTION

A refrigerator having an ice transfer unit according to an embodiment of the present invention will now be described in detail with reference to the accompanying drawings.

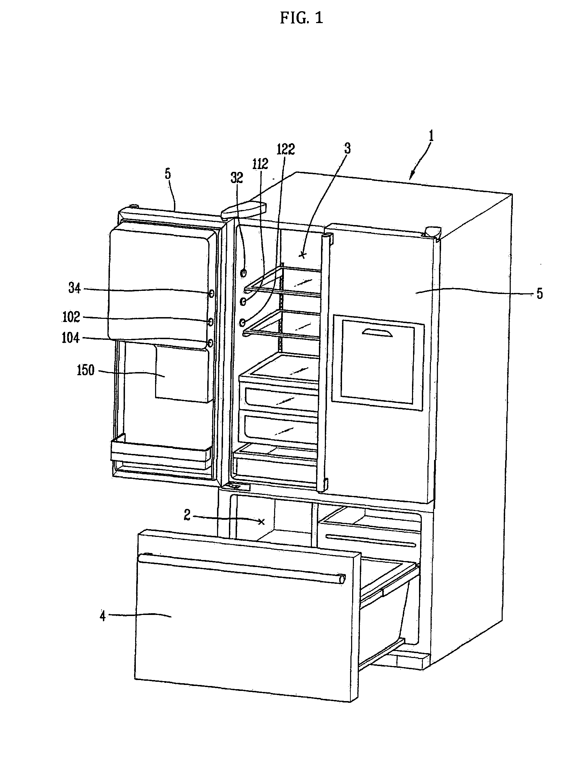

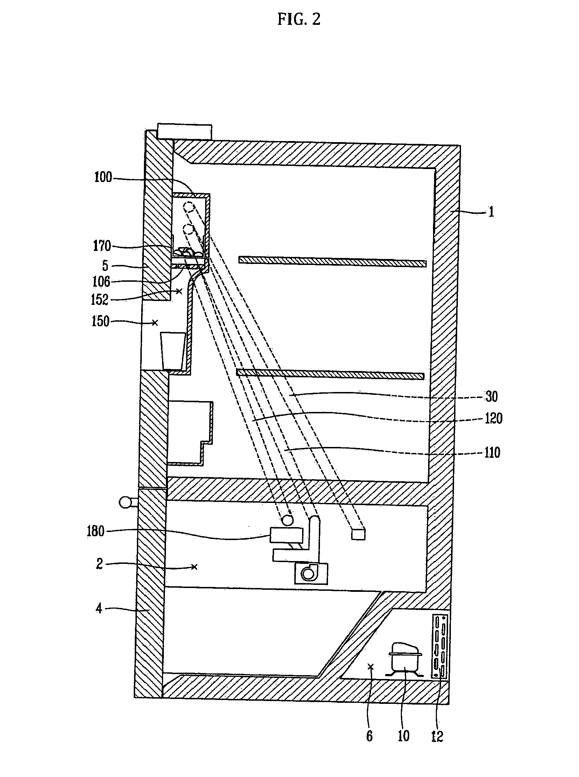

FIG. 1 is a perspective view of a refrigerator according to an embodiment of the present invention, and FIG. 2 is a vertical sectional view showing an internal structure of the refrigerator of FIG. 1. The refrigerator illustrated in FIG. 1 is a so-called French door type refrigerator in which a refrigerating chamber is disposed at an upper portion and a freezing chamber is disposed at a lower portion, and the refrigerating chamber is open and closed by two doors. Here, refrigerating chamber does not necessarily have two doors, and the refrigerating chamber may be open or closed by a single door.

As illustrated, the refrigerator according to an embodiment of the present invention, a freezing chamber 2 for freezing and keeping food items in storage is formed at a lower portion of the refrigerator main body 1, and a refrigerating chamber 3 for refrigerating and keeping food items in storage is formed at an upper portion of the refrigerator main body 1. One freezing chamber door 4 for opening and closing the freezing chamber 2 in a drawer manner is installed at the freezing chamber 2, and a plurality of refrigerating chamber doors 5 are installed at both sides of the refrigerating chamber 3 in order to open and close the refrigerating chamber 3 in a hinged manner from both sides. A mechanic chamber 6 in which a compressor 10 and a condenser 12 are installed is positioned at a lower end of a rear face of the refrigerator main body 1.

An evaporator (not shown) connected to the condenser and the compressor and supplying cooling air (or cold air) to the freezing chamber 2 or the refrigerating chamber 3 is generally installed between an outer case and an inner case at the rear face of the refrigerator main body 1, namely, at a rear wall face of the freezing chamber. However, the evaporator may be insertedly installed in the interior of a side wall face or an upper side wall face of the freezing chamber or may be insertedly installed in the interior of a barrier demarcating the freezing chamber 2 and the refrigerating chamber 3. Only one evaporator may be installed in the freezing chamber to distributedly supply cooling air to the freezing chamber 2 and the refrigerating chamber 3, or a freezing chamber evaporator and a refrigerating chamber evaporator may be separately installed and independently supply cooling air to the freezing chamber 2 and the refrigerating chamber 3.

An ice making chamber 100 is installed on an inner face of the refrigerating chamber door 5. Ice made by the ice maker 160 is introduced into the ice making chamber 100. An ice dispenser 150 is installed at a lower side of the ice making chamber 100. Three holes are formed at the side of the ice making chamber 100. A hole positioned at an upper side corresponds to a discharge hole 34 of a cooling air supply duct 30, a hole positioned at the center corresponds to an ice inlet 102 allowing ice transferred from a second ice bank to be introduced into the interior of the ice making chamber 100, and a hole positioned at a lower side corresponds to a discharge hole 104 allowing ice stored in a first ice bank installed in the interior of the ice making chamber 100 to be discharged toward the second ice bank.

Meanwhile, a cooling air supply duct 30, a first transfer duct 110, and a second transfer duct 120 are buried in the interior of a side wall of the refrigerator main body 1. The cooling air supply duct 30 serves to supply cooling air of the freezing chamber to the interior of the ice making chamber 100. A cooling air control damper 32 is provided at a discharge hole of the cooling air supply duct 30, so that when the door 5 is open, the cooling air control damper 32 closes the cooling air supply duct 30 to prevent a loss of cooling air. The cooling air control damper 32 is open when the door is closed, so as to communicate with the cooling air discharge hole 34.

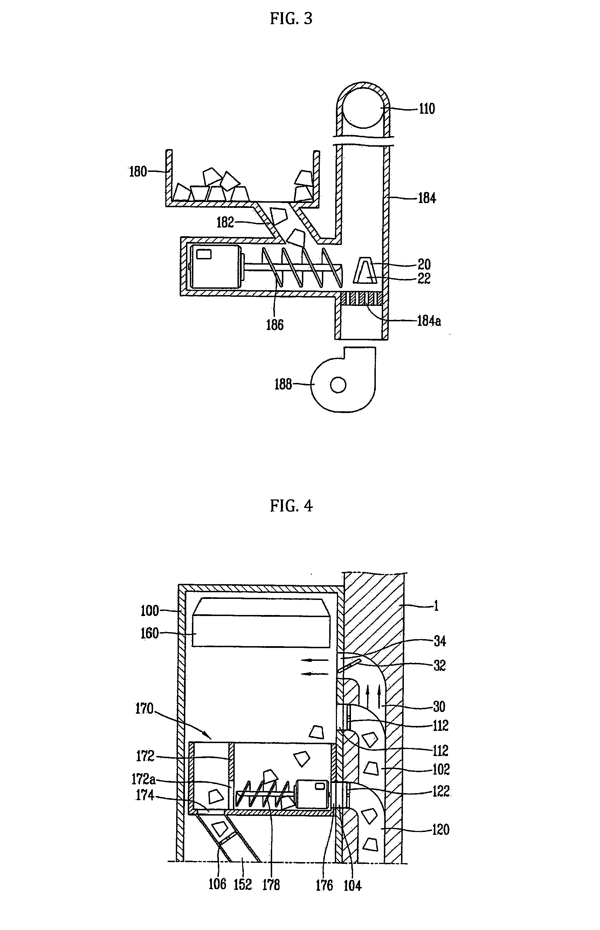

The first transfer duct 110 guides ice from the second ice bank to the first ice bank therethrough, and also includes a cooling air control damper 112 formed at a discharge hole thereof. Here, the cooling air control damper 112 of the first transfer duct 110 is open only when ice is transferred through the first transfer duct 110. Ice transferred from the first ice bank to the second ice bank is transferred through the second transfer duct 120. Like the first transfer duct 110, the second transfer duct 120 also includes a cooling air control damper 122. Meanwhile, as shown in FIG. 3, the ice inlet 102 and the discharge hole 104 formed at the side face of the ice making chamber 100 are positioned to communicate with the first transfer duct 110 and the second transfer duct 120 when the door 5 is closed.

Meanwhile, the ice dispenser 150 serves to supply ice introduced to the interior of the ice making chamber 100 to the outside, and as shown in FIG. 2, an ice supply damper 106 is installed in the interior of a connection pipe 152 of the ice making chamber 100 and the ice dispenser 150 to control supply of ice introduced to the ice making chamber 100 according to opening and closing of the ice supply damper 106.

The interior of the ice making chamber 100 is configured to be insulated from the interior of the refrigerating chamber 3, and receives cooling air from the freezing chamber through the cooling air supply duct 30 so as to be maintained at a temperature lower than that of the refrigerating chamber 3. The ice maker 160 is installed at an inner upper portion of the ice making chamber 100to make ice by cooling air supplied through the cooling air supply duct 30. Here, as the ice maker 160, a conventionally known ice maker may be used, so a detailed configuration thereof will be omitted.

A first ice bank 170 is installed at a lower side of the ice maker 160. the first ice bank 170 keeps ice made by the ice maker 160 in storage and communicates with the ice dispenser 150 to provide ice to the outside of the refrigerator. A partition 172 is provided in the interior of the first ice bank 170, and a through hole 17a is formed at a lower portion of the partition 172. ice is stored in a space positioned at a right side based on FIG. 3 among two spaces demarcated by the partition 172, and a first auger 178 having a spiral transfer blade is installed on a lower surface of the space such that it is rotated in a forward and backward direction.

The through hole 172a is positioned at one side based on the first auger 178, and a through hole 176 is positioned at the other side such that it faces the discharge hole 104 of the ice making chamber 100. Thus, ice stored in the first ice bank 170 is transferred to one side among the two through holes according to a rotational direction of the first auger 178. For example, ice transferred to the through hole 172a positioned at the left is transferred to the left space of the first ice bank 170 and supplied to the ice dispenser 150 through a dispenser side discharge hole 174 formed on a lower surface. Meanwhile, ice transferred to the through hole 176 positioned at the right freely falls by a self-load through the second transfer duct 120 and transferred to the second ice bank (to be described).

Cooling air supplied to the ice making chamber 100 through the cooling air supply duct 30 may be returned to the freezing chamber through the first transfer duct or the second transfer duct, and in the above embodiment, cooling air is returned to the freezing chamber through the second transfer duct. To this end, when cooling air is supplied through the cooling air supply duct 30, the cooling air control duct 122 is maintained to be open for a circulation of cooling air. Besides, a cooling air discharge hole may be formed in the ice making chamber 100 to allow cooling air supplied to the ice making chamber to be introduced to the interior of the refrigerating chamber so as to be utilized for maintaining the temperature of the refrigerating chamber.

Meanwhile, aside from the first ice bank 170, a second ice bank 180 is provided in the interior of the freezing chamber. The second ice bank 180 serves to store ice along with the first ice bank 170, but because it is exposed from the interior of the freezing chamber, it maintains the same temperature as that of the freezing chamber. Thus, since the second ice bank 180 is maintained at a temperature lower than that of the first ice bank 170, ice can be relatively more stably kept in storage therein. Namely, the first ice bank 170 is affected by the temperature of the refrigerating chamber and exposed to external air when the door 5 is open or closed, having a possibility in which ice kept in storage is melt, but, in comparison, because the second ice bank 180 is positioned in the interior of the freezing chamber maintained at a below zero temperature, the ice kept in storage therein cannot be easily melt.

Thus, in the above embodiment, ice made by the ice maker 160 is distributed stored in the first ice bank and the second ice bank, and in this case, a minimum amount of ice to be supplied through the dispenser may be kept in storage in the first ice bank while a majority of remaining ice may be stored in the second ice bank which is relatively advantageous for keeping ice in storage. Thus, since ice is to be continuously transferred between the first and second banks, a transfer unit is required.

As an ice transfer unit, ice may be transferred by using a blow fan, a conveyer belt, a screw, or the like, and in the present embodiment, a blow fan is used as a transfer unit.

Namely, with reference to FIG. 4, an ice supply path 182 is positioned at a lower portion of the second ice bank 180 positioned in the freezing chamber such that it communicates with an internal space of the second ice bank 180. The ice supply path 182 is connected with a freezing chamber side transfer duct 184. The freezing chamber side transfer duct 184 is installed to be exposed from the internal space of the freezing chamber 2, and an end portion thereof is connected with the first transfer duct 110. Also, an ice support portion 184a is formed at a lower portion of the freezing chamber side transfer duct 184. The ice support portion 184a is made of a material allowing air to transmit therethrough, and in the present embodiment, the ice support portion 184a is made of a mesh material. However, the ice support portion 184a may not be necessarily made of a mesh material, and it may be formed to have a plurality of through holes allowing air to pass therethrough.

A second auger 186 is installed at a lower portion of the ice supply path 182 in order to transfer ice within the second ice bank 180 supplied through the ice supply path 182 to an upper side of the ice support portion 184a. The thusly transferred ice is transferred to the first ice bank 170 by a blow fan 188 installed at a lower end portion of the freezing chamber side transfer duct 184. The blow fan 188 is configured as a centrifugal fan for making air flow in an axial direction of an impeller (not shown) installed therein and discharging air in a radial direction according to a rotation of the impeller. A discharge side is positioned at an end portion of the freezing chamber side transfer duct 184.

Air discharged by the blow fan 188 applies pressure to ice placed on the ice support portion to allow ice to be transferred to the interior of the first ice bank through the freezing chamber side transfer duct 184 and the first transfer duct 110. Here, the freezing chamber side air supplied together with ice to the ice making chamber 100 is returned to the freezing chamber through the second transfer duct 120.

Accordingly, a closed flow path is formed by the freezing chamber side transfer duct 184, the first transfer duct 110, the ice making chamber 100, the second transfer duct 120, the freezing chamber 2, and the blow fan 188, and air positioned in the freezing chamber circulates along the closed flow path. Here, the blow fan 188 acts as a power source triggering air circulation along the closed flow path.

Meanwhile, the second auger 186 includes a spiral blade in the form of a water mill, and ice can be sequentially input to the interior of the freezing chamber side transfer duct 184 one by one according to a rotation of the blade. Also, an end portion of the spiral blade serves to close an ice input hole formed on a wall face of the freezing chamber side transfer duct 184, thus preventing air blown by the blow fan 188 from flowing to the ice supply path 182 to a degree.

Besides, a damper may be installed to open and close a connection portion of the freezing chamber side transfer duct 184 and the second auger 186. The damper may be configured to be open and closed only when ice is supplied by the auger, and may be installed to slide up and down along the freezing chamber side transfer duct 184.

The operation of the embodiment will now be described.

Ice made by the ice maker 160 is primarily supplied to the first ice bank 170. Thereafter, when a controller (not shown) detects that ice of more than a certain amount is stored in the first ice bank 170, the controller operates the first auger 178 to push the ice of more than the certain amount toward the second ice transfer duct 120.

Since the first ice bank is positioned to be higher than the second ice bank, ice input toward the second ice transfer duct 120 by the first auger is supplied by a self-load to the interior of the second ice bank 180. Through this process, when ice is sufficiently stored in both the first and second ice banks, the controller stops operating of the ice maker.

Here, because a storage capacity of the second ice bank is greater than that of the first ice bank, a majority of produced ice is kept in storage in the second ice bank, namely, within the freezing chamber, so ice can be stored while being maintained in the state when it was made. In this state, when an ice dispensing command is input by a user, the dispenser 150 is operated to supply ice from the first ice bank.

If it is detected that there is no ice in the first bank or it is detected that ice does not reach a minimum amount, the controller operates the ice maker to additionally supply ice to the interior of the first ice bank. However, when there is an ice dispensing command from the user before ice is completely made by the ice maker, the controller checks a remaining amount of ice in the interior of the second ice bank. When it is detected that there is ice in the second ice bank, the controller operates the second auger 186 and the blow fan 188 to transfer ice stored in the second ice bank to the first ice bank. The thusly transferred ice can be supplied to the outside through the dispenser, and when ice making is completed, ice is additionally supplied to the second ice bank.

Here, the ice may have a certain shape. As shown in FIG. 4, ice 20 may have a shape of a truncated cone overall and includes a pressure receiving portion 22 formed therein. The pressure receiving portion 22 is formed to be recessed from the surface of ice to allow air supplied from the blow fan 188 to be introduced thereto and thus allow ice to be easily moved along air. In addition, since a bulk density of ice is lowered owing to the presence of the pressure receiving portion 22, ice can be smoothly transferred although an air volume of the blow fan is not great. Here, the ice is not necessarily limited to the illustrated form and may have a semi-circular shape or a spherical shape with an empty inner portion.

Meanwhile, the first and second transfer ducts are not be necessarily buried in the interior of the wall body of the refrigerator main body and may be installed to be exposed from the interior of the refrigerator. Also, an additional cooling air return duct allowing cooling air supplied by the cooling air supply duct to be returned to the freezing chamber may be additionally provided.

Also, the blow fan is not necessarily provided as a transfer unit, and a conveyer belt, a transfer screw, or the like, may also be provided.

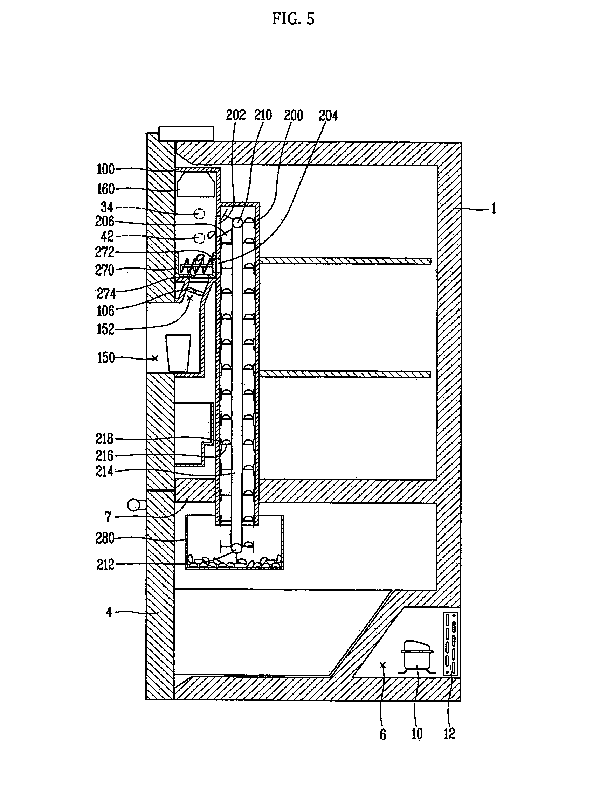

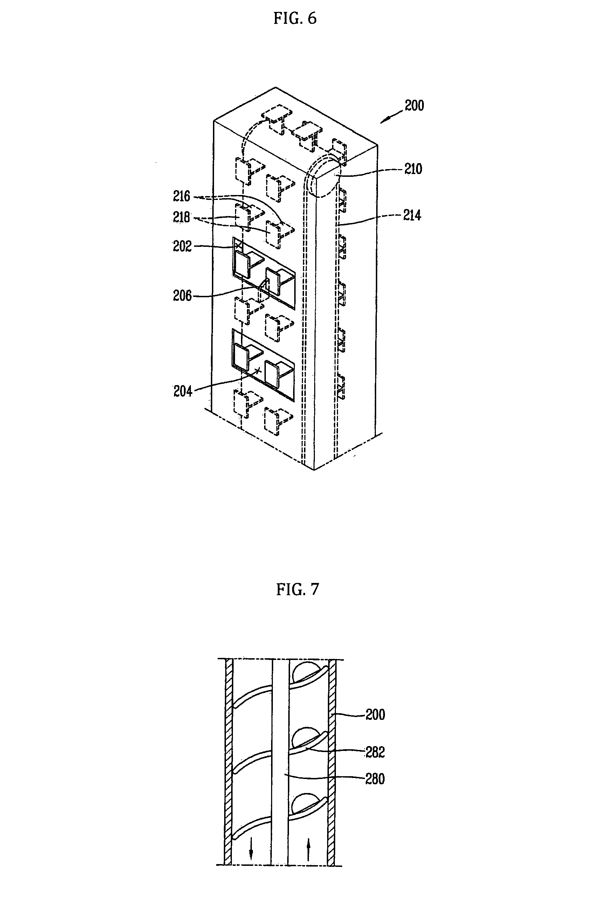

FIG 5 is a vertical sectional view of a refrigerator according to another embodiment of the present invention. FIG. 6 is a perspective view showing a portion of a conveyer belt in FIG. 5. In the following description, the same reference numerals are used for the same components as those of the embodiment illustrated in FIG. 2, a repeated description will be omitted. With reference to FIGS. 5 and 6, a cooling air discharge hole 34 allowing cooling air to be supplied therethrough to the interior of the ice making chamber and a cooling air suction hole 42 allowing supplied cooling air to be returned therethrough are formed. The cooling air suction hole 42 allows cooling air discharged to the freezing chamber side to be returned through a cooling air return duct therethrough.

The first ice bank 270 is positioned at a lower side of the cooling air suction hole 40. An ice outlet 272 is formed at the side of the first ice bank 270, and a first auger 278 is installed to be adjacent to the ice outlet 272. The first auger 278 serves to push ice stored in the interior of the first ice bank 270 toward the ice outlet 272. Also, a dispenser side connection hole 274 is formed at the side of the first auger 278 (in a direction perpendicular to the ground based on FIG. 5) so that ice can also be supplied to the dispenser 150.

Meanwhile, a second ice bank 280 is provided in the freezing chamber, and a first transfer duct 200 is installed between the second ice bank 280 and the ice making chamber 100. The first transfer duct 200 is configured in the form of a pipe having a substantially quadrangular section, and positioned to penetrate a partition member 7 partitioning the refrigerating chamber and the freezing chamber. A driving pulley 210 and a follower pulley 212 rotatably mounted and spaced apart in the interior of the first transfer duct 200 and a conveyer belt 214 extending between the driving pulley and the follower pulley are installed in the interior of the first transfer duct 200. A plurality of ice support plates 216 are mounted at certain intervals on the conveyer belt 214, and a release preventing portion 218 is formed at an end portion of each of the ice support plate 216 such that it forms a T shape along with the ice support plate 216.

Here, the follower pulley 212 is positioned to be protruded from the first transfer duct 200. In detail, the follower pulley 212 is positioned to be adjacent to a bottom surface of the second ice bank 280. Thus, when the conveyer belt 214 rotates, ice can be transferred upward by the ice support plates 216 and the release preventing portion 218.

Meanwhile, the first transfer duct 200 communicates with the interior of the ice making chamber 100 through an ice supply hole 202, whereby transferred ice can be supplied to the interior of the first ice bank 270 through the ice supply hole 202. Here, an ice separation member 206 is positioned on an inner wall face of the first transfer duct 200, in adjacent to the ice supply hole 202. As shown in FIG. 2, the ice separation member 206 is positioned between a pair of ice support plates 216 and prevents ice transferred by the ice support plate 216 from being returned to the second ice bank.

An ice inlet 204 is positioned at a lower side of the ice supply hole 202. The ice inlet 204 faces the ice outlet 272 to allow ice supplied by the first auger to be introduced into the first transfer duct 200.

The operation of the embodiment will now be described. Here, an operation method of the embodiment illustrated in FIG. 5 is the same as the embodiment illustrated in FIG. 2, except for a transfer unit, so a detailed description thereof will be omitted. First, when ice is transferred from the first ice bank to the second ice bank, the first auger is operated to supply ice to the interior of the first transfer duct 200 through the ice outlet 272 and the ice inlet 204. The thusly supplied ice is supplied to the second ice bank 280 along the conveyer belt 214 by the ice support plate 216 and the release preventing portion 218.

Conversely, when ice is transferred from the second ice bank to the first ice bank, the conveyer belt 214 is moved to allow the release preventing portion 218 to graze a lower surface of the second ice bank, and in this process, a portion of ice is supplied to the interior of the first transfer duct 200 by the ice support plate 216 and the release preventing portion 218. Thereafter, when ice passes by the driving pulley 210, it is dropped down by self-load, but in this case, ice is caught by the ice separation member 206 and thus supplied to the first ice bank through the ice supply hole 202, rather than being dropped down.

Meanwhile, a spiral transfer screw, instead of the conveyer belt, may be installed in the interior of the first transfer duct. FIG. 7 schematically shows an example of installation of a spiral transfer screw within the first transfer duct 200. A spiral screw 282 is installed around a rotational shaft 280 extending in a lengthwise direction in the interior of the first transfer duct 200, and ice can be transferred upward or downward by using the spiral screw 282.

For example, in FIG. 7, when the spiral screw is rotated in one direction, ice may be transferred upward, and when the spiral screw is rotated in the opposite direction, ice may be transferred downward. Here, in order to prevent ice from sliding along the surface of the spiral screw, a sliding preventing portion, such as a protuberance, or the like, may be formed on the surface of the spiral screw.

As the present invention may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A refrigerator comprising:
a refrigerator main body including a freezing chamber positioned at a lower portion thereof and a refrigerating chamber positioned at an upper side of the freezing chamber;
an ice maker positioned at a portion in any of the freezing chamber and the refrigerating chamber;
first and second ice banks storing ice made by the ice maker;
an ice dispenser supplying ice stored in the first ice bank and positioned in the refrigerating chamber; and
an ice transfer unit transferring ice between the first and second ice banks,
wherein the first and second ice banks are installed in separate spaces which are thermally insulated and maintained at a different temperature, respectively.

2. The refrigerator of claim 1, wherein the first ice bank is positioned in the refrigerating chamber, and the second ice bank is positioned in the refrigerating chamber.

3. The refrigerator of claim 1, wherein both first and second ice banks are positioned in the refrigerating chamber such that the second ice bank is provided at an inner side of the refrigerating chamber and positioned in an insulating space maintained at a temperature lower than that of the refrigerating chamber.

4. The refrigerator of claim 2, wherein the ice transfer unit comprises:
first and second transfer ducts extending between the first and second ice banks, respectively;
a first ice input unit inputting ice stored in the first ice bank to the first transfer duct;
a second ice input unit inputting ice stored in the second ice bank to the interior of the second transfer duct; and
a blower blowing air to the interior of the second transfer duct to pressure-transfer the ice to the first ice bank.

5. The refrigerator of claim 2, wherein the ice transfer unit comprises:
first and second transfer ducts extending between the first and second ice banks, respectively;
a first ice input unit inputting ice stored in the first ice bank to the first transfer duct;
a second ice input unit inputting ice stored in the second ice bank to the interior of the second transfer duct; and
a conveyer belt installed in the second transfer duct and transferring ice stored in the second ice bank to the first ice bank.

6. The refrigerator of claim 4 or claim 5, further comprising:
a cooling air supply duct supplying cooling air toward the ice maker, wherein the cooling air supplied through the cooling air supply duct is returned to the freezing chamber through the first transfer duct.

7. The refrigerator of claim 4 or claim 5, wherein at least one of the first and second transfer ducts is buried in the inner wall of the refrigerator main body.

8. The refrigerator of claim 4 or claim 5, wherein a damper for opening and closing a first ice bank side opening of each of the first and second transfer ducts is additionally provided, and the damper is controlled to open the opening only when ice is transferred, thus minimizing a leakage of cooling air.

9. The refrigerator of claim 2, wherein the ice transfer unit comprises:
a first transfer duct extending between the first and second ice banks; and
a spiral transfer screw installed at the inner side of the first transfer duct and forwardly and reversely moving to transfer ice in both directions between the first and second ice banks.

10. The refrigerator of claim 4 or claim 5, wherein the first ice input unit includes a first auger for pushing ice stored in the first ice bank to the opening of the first transfer duct.

11. The refrigerator of claim 4 or claim 5, wherein the second ice input unit comprises:
an ice input path connected with the second ice bank; and
a second auger pushing ice input from the ice input path to an inner side of an input hole formed on the second transfer duct.

12. The refrigerator of claim 11, further comprising:
a damper for opening and closing the input hole formed on the second transfer duct.

13. The refrigerator of claim 12, wherein an ice support portion for supporting ice input to the interior of the second transfer duct is provided, and the ice support portion is formed such that it allows air to pass therethrough.

14. The refrigerator of claim 1, wherein the ice maker is provided on the refrigerating chamber side door.

15. The refrigerator of claim 1, wherein the ice maker is provided within the refrigerating chamber.
